# FASCICULE DE BREVET EUROPEEN

(11) **EP 1 686 142 B1**
(45) Date de publication et mention de la délivrance du brevet: **09.03.2011**
(21) Numéro de dépôt: 06290144.2
(22) Date de dépôt: 24.01.2006
(51) Int. Cl.: C08F 283/04

(54) **Greffage d'une poudre de polyamide par irradiation gamma**
Pfropfung von Polyamidpulver mit Gammastrahlung
Grafting of a polyamide powder by gamma irradiation

(30) Priorité: 28.01.2005 FR 0500885
(43) Date de publication de la demande: 02.08.2006
(73) Titulaire: ARKEMA FRANCE, 92700 Colombes (FR)
(72) Inventeur: Loyen, Karine, 27500 Pont-Audemer (FR); Ster, Hervé, 27470 Serquigny (FR); Senff, Holger, 27470 Serquigny (FR); Fine, Thomas, 27470 Serquigny (FR)
(74) Mandataire: Lhoste, Catherine

(56) Documents cités:
- WO-A-99/24483
- FR-A- 2 856 403
- US-A- 4 929 682
- US-A- 5 576 106
- US-A- 5 616 598
- US-A- 6 165 455
- US-A1- 2002 042 349
- US-B1- 6 451 919

## Description

L'invention se situe dans le domaine des particules de poudres de polyamide (abrégé PA) ou copolyamide (abrégé CoPA) bloc ou non notamment de copolyesteramides, greffées directement en surface par des greffons qui sont des molécules au moins bi-fonctionnelles. Un CoPA bloc est un PolyEtherBlocAmide (abrégé PEBA)

L'une des fonctions de ladite molécule permet de greffer cette molécule sur une particule de polymères mentionnés ci-dessus.

L'autre fonction, libre, servira à compatibiliser, suivant sa nature chimique, la particule greffée avec le milieu dans lequel cette dernière sera rajoutée par des liaisons covalentes ou des liaisons physiques. Voire, elle permettra des réactions chimiques entre la particule greffée et une autre molécule fonctionnalisée.

Dans le cadre des revêtements de surface tels que les revêtements UV-réticulables, revêtements polyesters, revêtements polyuréthanes, revêtements acryliques entre autre, il est important de disposer d'un matériau résistant à l'abrasion, aux rayures et plus généralement d'améliorer les propriétés de résistance mécanique du revêtement. Cette résistance est apportée par l'ajout dans ces milieux (milieu UV-réticulable, polyester, polyuréthane, acrylique) d'éléments. connus pour leurs propriétés de résistance mécanique que sont les poudres de polyamide ou copolyamide.

De même dans des milieux hydrophiles se pose le problème de la compatibilité des poudres de PA ou CoPA hydrophobes que l'on rajoute à ces milieux.

Il existe des procédés de fonctionnalisation des poudres de polyamides pour améliorer leur campatibilité avec des revêtements. Dans la plupart des cas, cela consiste à introduire un composé fonctionnel dans le polymère au cours de sa polymérisation. Cependant, la copolymérisation de ces composés fonctionnels est souvent difficile à contrôler, entraînant des répartitions non homogènes. De plus, les nombreuses étapes (broyage, séchage, tamisage, ...) du procédé doivent souvent être adaptées afin de conserver la réactivité de ces composés fonctionnels jusqu'à l'obtention de la poudre finale.

Il est donc important de disposer de particules de poudres de polymères, en particulier de PA ou CoPA, compatibles dans différents milieux, cette compatibilité pouvant être apportée rapidement, en peu d'étapes et à la carte en fonction des besoins du client sur un produit de base commercialisé en grande quantité: le polymère. Ce procédé de compatibilisation doit être réalisable pour toutes les poudres de polyamides ou copolyamides, indépendamment de leur procédé d'obtention.

Le problème technique à résoudre est un problème de compatibilité entre ces milieux et lesdites poudres de polymères en particulier les poudres de PA ou de CoPA et conserver des principes actifs dans un même milieux sans que ceux-ci puissent migrer hors dudit milieu.

La demanderesse a donc trouvé la possibilité d'ajouter à des milieux des particules de poudres, en particulier de polyamide ou copolyamide, rendues compatibles avec de tels milieux par un procédé de greffage situé en aval de la fabrication desdites poudres. Cette compatibilité est rendue possible grâce à un procédé de greffage des particules de poudres par des greffons au moins bi-fonctionnalisés rendant réactives ou compatibles les particules de poudre vis à vis des milieux dans lesquelles elles pourront être rajoutées ultérieurement.

Dans le cas d'un milieu hydrophile par exemple, le greffage de la particule de polyamide ou copolyamide hyrophobe par un greffon à fonction hydrophile permet de faciliter la dispersion de la particule dans ledit milieu, en apportant des propriétés hydrophiles à cette particule.

La fonctionnalisation de la poudre par greffage peut être utilisé pour modifier directement les propriétés de surface de la poudre de polymères, en particulier de polyamide ou de copolyamide.

L'invention a pour objet un procédé de fabrication de particules de poudre greffées en surface, caractérisé en ce qu'il comprend:
a) une étape de mélange desdites particules de poudre avec au moins un monomère de greffage fonctionnalisé, les dites particules de poudre étant des particules de polyamide (PA), copolyamide (CoPA), de PolyEtherBlocAmide (PEBA), puis;
b) une étape d'irradiation photonique (Y) ou électronique de la poudre imprégnée de monomère de greffage fonctionnalisé issue de a), ceci sous une dose comprise entre 0,5 et 15 Mrad.

Selon un mode de réalisation, on effectue une étape c) après l'étape b) consistant à éliminer tout ou partie du monomère de greffage n'ayant pas été greffé sur la poudre lors de l'étape b).

Selon un mode de réalisation, le monomère de greffage fonctionnalisé introduit au cours de l'étape a) est un monomère de greffage bi-fonctionnalisé, comprenant au moins une première fonction comportant au moins une insaturation éthylénique susceptible de réagir avec la particule à greffer et au moins une seconde fonction réactive par liaison covalente ou physique.

Selon un mode de réalisation, on effectue une étape d) après l'étape c) consistant à introduire un second greffon au moins mono-fonctionnalisé comprenant au moins une fonction susceptible de réagir avec la seconde fonction du monomère de greffage bi-fonctionnalisé.

Selon un mode de réalisation, la seconde fonction réactive du monomère de greffage bi-fonctionnallsé introduit au cours de l'étape a) est choisie parmi une fonction acide carboxylique et ses dérivés, ester, anhydride, chlorure d'acide amide, cétone, isocyanate, oxazoline, époxyde, amine ou hydroxyde

Selon un mode de réalisation, le monomère de greffage bi-fonctionnalisé introduit au cours de l'étape a) est l'anhydride maléique ou l'anhydride méthacrylique.

L'invention a également pour objet une particule de poudre de polyamide (PA), copolyamide (CoPA), de PolyEtherBlocAmide (PEBA), greffée en surface par au moins un monomère de greffage fonctionnalisé par au moins une fonction réactive.

L'invention peut aussi être relative à une particule de poudre de polyamide (PA), de copolyamide (CoPA), de PolyEtherBlocAmide (PEBA), greffée en surface par au moins deux monomères de greffage fonctionnalisés chacun par au moins une fonction réactive différente.

Selon un mode de réalisation des particules, les monomères de greffage fonctionnalisé est un monomère de greffage au moins bi-fonctionnalisé, comprenant au moins une première fonction comportant au moins une insaturation éthylénique susceptible de réagir avec la particule à greffer et au moins une seconde fonction réactive susceptible de réagir par liaison covalente ou physique.

Selon un mode de réalisation des particules, le monomère de greffage au moins bi-fonctionnalisé est lié à un second greffon au moins mono-fonctionnalisé, ledit greffon comprenant au moins une fonction susceptible de réagir avec la seconde fonction du monomère de greffage bi-fonctionnalisé par l'intermédiaire d'une liaison covalente ou physique.

Selon un mode de réalisation, la particule de poudre de polyamide est choisie parmi le PA6, le PA6-6, le PA11 et le PA12.

Selon un mode de réalisation des particules, la fonction réactive du ou des monomère(s) de greffage fonctionnalisé(s) est choisie parmi une fonction acide carboxylique et ses dérivés, ester, anhydride, chlorure d'acide, amide, cétone, isocyanate, oxazoline, époxyde, amine ou hydroxyde.

Selon un mode de réalisation des particules, le monomère de greffage fonctionnalisé est fonctionnalisé par au moins une fonction réactive à propriétés biocides et/ou blostatiques.

L'invention a aussi trait à une composition comprenant des particules telles que décrites précédemment.

Elle est également relative à l'utilisation de particules de poudre telle que décrites précédemment pour améliorer l'adhésion des particules de polymères, en préférence en PA, CoPA ou PEBA, sur substrats tels que papier, cellulose, substance kératinique de la peau, cheveux, ongles et poils.

Selon un mode de réalisation, elle concerne l'utilisation de particules de poudre telles que décrites plus haut dans des compositions cosmétiques pour améliorer l'effet glissant et/ou l' effet soyeu

Selon un mode de réalisation, elle concerne l'utilisation de particules de poudre telles que décrites plus haut pour favoriser l'effet peau de pèche.

Selon un mode de réalisation, elle concerne l'utilisation de particules de poudre caractérisée en ce que le second greffon au moins mono-fonctionnalisé est choisi parmi les filtres UV, les anti-radicaux libres, les hydratants, les colorants, les auto-bronzants, les nano-particules (diamètres élémentaires des grains <ou= à 100nm)recouvertes en surface par un traitement compatible avec la seconde fonction du monomère de greffage au moins bi-fonctionnalisé.

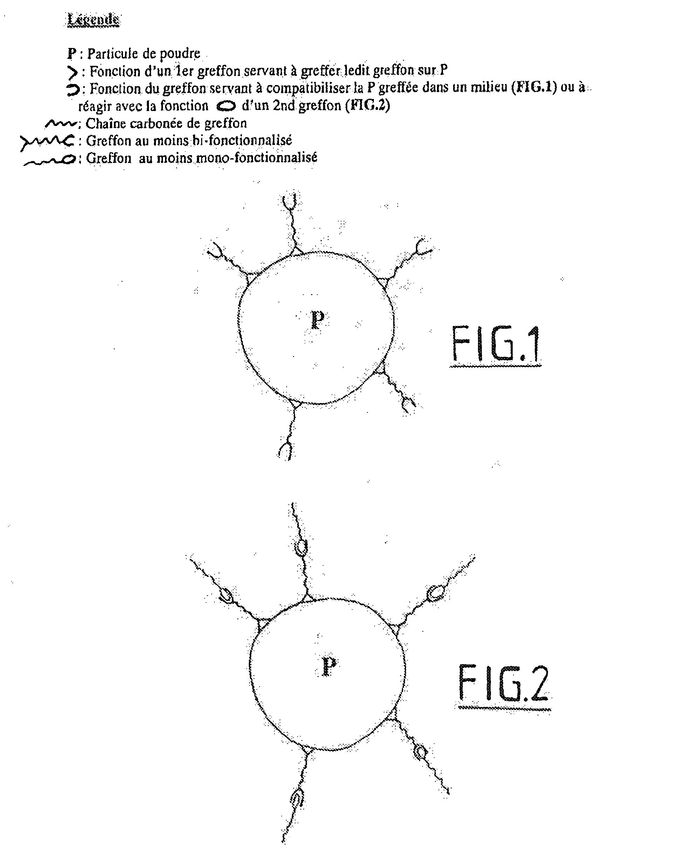

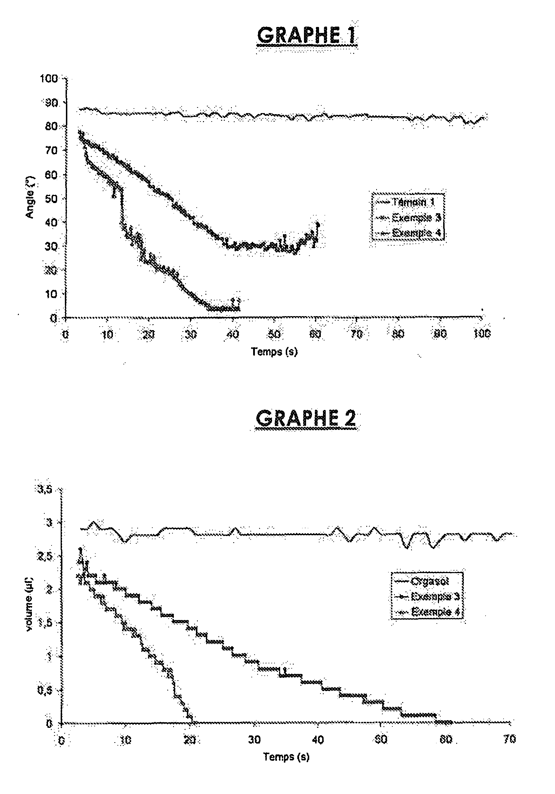

La FIG.1 représente une particule (P) greffée en surface par un premier greffon bi-fonctionnalisé, en coupe transversale.
La FIG. 2 représente, toujours en coupe transversale, la même particule que précédemment qui est en plus greffée par un 2^{nd} greffon, mono-fonctionnalisé, ceci grâce à une réaction inter-greffon, la fonction restée libre du premier greffon greffe sur la particule (P) de la FIG. 1 ayant réagit avec la fonction du 2^{nd} greffon pour formée la particule greffée de la FIG.2.
Le graphe 1 montre l'évolution de l'angle de contact en fonction du temps pour une poudre non modifiée (témoin) et deux poudres modifiées. Le graphe 2 montre l'évolution du volume d'eau de la goutte déposée en fonction du temps pour une poudre non modifiée (témoin) et deux poudres modifiées.

S'agissant du monomère de greffage fonctionnalisé, c'est une molécule disposant d'au moins 2 fonctions à savoir
- au moins une première fonction comportant au moins une insaturation éthylénique telle qu'une double liaison susceptible de réagir avec la particule à greffer et;
- au moins une seconde fonction réactive compatible avec le milieu dans lequel la particule pourra être ajoutée ultérieurement et en particulier une fonction réactive susceptible de réagir avec ledit milieu. On peut parler de molécule ou greffon au moins bi-fonctionnelle ou bi-fonctionnalisé.

La seconde fonction est fonction du milieu dans lequel la particule greffée selon l'invention sera rajoutée. Ainsi, cette seconde fonction est lipophile pour un milieu à phase grasse et est hydrophile pour un milieu à phase aqueuse.

Une phase grasse au sens de l'invention est une phase contenant des huiles, des solvants organiques, liquides à température ambiante (Ta = de 20 à 25°C) et une phase aqueuse est une phase contenant de l'eau éventuellement additionnée d'un alcool mono ou poly-hydroxyle soluble dans eau (méthanol, n-propanol, isopropanol, isobutanol, glycérol).

Il est aussi possible d'utiliser le greffage pour conférer aux particules un caractère amphiphile, combinant des propriétés lipophiles et hydrophiles. De telles particules pourront être utilisées avantageusement dans des émulsions (dispersions de phase grasse dans une phase continue aqueuse, ou inversement, dispersions de phase aqueuse dans une phase continue grasse) et contribuer à la stabilisation de ces systèmes complexes.

Comme seconde fonction lipophile selon l'invention, on peut citer les chaînes hydrocarbonées (contenant de 32 à 20 atomes de carbone), les chaînes siliconées (contenant de 2 à 20 groupements Si-O), les chaînes fluorées et/ou fluorosiliconées.

Comme seconde fonction hydrophile selon l'invention, on peut citer les fonctions amines, carbonyle, cyano, oxazole, époxy, hydroxyle et leurs combinaisons.

A titre d'exemples de fonction réactive, on peut citer les acides carboxyliques et leurs dérivés, les esters, les anhydrides, les chlorures d'acides, les amides, les cétones, les isocyanates, les oxazolines, les époxydes, les amines ou les hydroxydes.

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés. On peut encore citer l'acide undécylènique.

Des acides dicarboxytiques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, atiylsuccinique, cyclchex-4-ène-1,2-dicarboxylique, 4-méthyl-cyclohex-4-ène-1,2-dicarboxylique, bicyclo(2,2,1) hept-5-ène-2,3-dicarboxylique, x-méthylbicyclo(2,2,1-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo (2,2,1) hept-5-ène-2,2-dicarboxylique.

Des exemples d'autres monomères de greffage comprennent :
- des esters alkyliques en C₁-C₂₂, des dérivés esters glycidyliques ou des dérivés esters fluorés des acides carboxyliques insaturés tels que acrylate de méthyle, méthacrylate de méthyle, acrylate d'éthyle, méthacrylate d'éthyle, acrylate de butyle, méthacrylate de butyle, acrylate de nonyle, méthacrylate de nonyle, acrylaye de 2-ethyl hexyl, méthacrylate de 2-ethyl hexyl, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle, méthacrylate de trifluoroethyl, acrylate d'hexafluoroethyl (ou AC8n);
- des dérivés amides des acides carboxyliques insaturés tels que acrylamide, méthacrylamids, monoamide maléique, diamide maléique, N-monoéthylasmide maléique N,N-diéthylamide maléique, N-monobutylamide maléique, N, N-dibutylamide maléique, monoamide furamique, diamide furamique, N-monoéthylamide fumarique, N,N-diéthyiamide fumarique, N-monobutylamide fumarique et N,N-dibutylamide furamique;
- des dérivés imides des acides carboxyliques insaturés tels que maléimide, N-butylmaléimide et N-phénylmaléimide ;
- des sels métalliques d'acides carboxyliques insaturés tels que acrylate de sodium, méthacrylate de sodium, acrylate de potassium, et méthacrylate de potassium.
- Des alcoxysilanes portant une insaturation tels que les vinyltrialcoxysilanes de formules CH2=CH-Si-(OR)₃ où R représente un groupement alkyle ou alcoxyle, ou les ((metha)cryloxyalkyl)trialcoxysilanes.

On peut citer encore:
- les esters polyallyliques d'acides carboxyliques et autres ester trialtyleyanurate, triallylisocyanurate, triallylphosphate, triallyltrimellitate;
- les esters acryliques et méthacryliques d'alcools polyhydriques : diméthacrylate d'éthylène glycol, (1,3)-triméthacrylate-2-éthyl-(hydroxyméthyl)-propanediol ;
- les amides et acrylamides : N-acrylamide, N,N'methylenebis-acrylamide.

Avantageusement on utilise l'anhydride maléique ou l'anhydride méthacrylique.

Les particules de poudres selon invention peuvent être greffées par un procédé de greffage en une ou deux étapes. On parle de « poudre greffée fonctionnalisée » ou de « poudre fonctionnalisée » les deux termes signifiant la même chose.

Les particules de poudres de polymères, en particulier de PA ou de CoPA, peuvent être greffées par un procédé de greffage en une étape. Les particules de poudres sont donc dans un premier temps greffées en surface par des molécules au moins bi-fonctionnelle grâce à une première fonction, la seconde fonction restant libre. Cette seconde fonction, en fonction de sa nature chimique, pourra former des liaisons covalentes ou des liaisons physiques vis à vis du milieu (par exemple un revêtement) dans lequel la particule de poudre ainsi greffée sera ajoutée ultérieurement.

Un mode opératoire ou procédé de greffage selon l'invention est le suivant:

### Etape a)

Le monomère de greffage fonctionnalisé est dissous dans un soivant de préférence volatil pour pouvoir ensuite être éliminé par évaporation sous vide ou par tout autre moyen à des températures relativement basses (de préférence inférieures à 50°C).

Les solvants utilisés peuvent être par exemple l'éthanol, l'acétone, l'héxane, le cyclohexane, l'eau.

La solution obtenue est ensuite introduite goutte à goutte sur la poudre, telle que décrite précédemment, et maintenue en agitation afin de disperser le monomère de greffage fonctionnalisé de façon homogène dans l'ensemble de la poudre. Le solvant est ensuite évaporé, totalement ou en partie, sous vide à une température modérée.

### Etape b)

La poudre imprégnée de monomère de greffage fonctionnalisé est conditionnée dans un contenant préférentiellement étanche et soumise, de préférence en l'absence d'air, à une irradiation photonique (y) ou électronique (β) sous une dose comprise entre 1 et 15 Mrad. On utilise de préférence une irradiation photonique.

### Etape c)

On peut éventuellement laver, pour finir, la poudre afin d'éliminer tout ou partie du monomère de greffage fonctionnalisé qui n'a pas été greffé sur la poudre durant l'étape précédente.

Dans le cadre de la fonctionnalisation de particules, on ne peut pas toujours greffer les fonctionnalités recherchiées, Il est donc nécessaire dans ce cas d'utiliser un procédé de greffage en deux étapes. On réalise au cours d'une première étape (i) un premier greffage sur une particule de polymère, en particulier de PA ou CoPA, d'un premier greffon au moins bi-fonctionnel, ce dernier étant une molécule comprenant au moins une première fonction qui sert au greffage du greffon sur ladite particule et au moins une seconde fonction qui reste libre puis (ii) on fait réagir ladite fonction restée libre du premier greffon avec un second greffon au moins mono-fonctionnel, ce dernier étant une molécule comprenant au moins une fonction qui va réagir avec la fonction restée libre du premier greffon. Ce second greffon apporte les propriétés recherchées pour des applications ultérieures de la particule.

Suite au étape a), b) ou a), b) etc), on effectue une étape d) consistant à introduire un second monomère de greffage au moins mono-fonctionnalisé, le monomère de greffage introduit au cours de l'étape a) étant lui-même au moins bi-fenctionnalisé. Le greffage du second greffon sur le premier greffon se fait par des réactions classiques de la chimie organique bien connues de l'homme de l'art.

S'agissant de la poudre à greffer, on peut citer les poudres de polyamides (PA), de copolyamides (CoPA) en particulier de CoPA blocs ou PEBA notamment de copolyesteramides, . De préférence, on utilise des poudres de polyamide ou copolyamide pour réaliser le greffage.

On entend par polyamides les produits de condensation :
d'un ou plusieurs aminoacides, tels les acides aminocaproïques, amino-7-heptanoïque, amino-11-undécanôique et amino-12-dodécanoïque
- d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la méthaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique.

A titre d'exemple de polyamide, on peut citer le PA6, le PA 6-6, le PA 1 et le PA 12.

S'agissant des poudres de copolyamides, on peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique. On peut encore citer les copolyamides résultant de la condensation d'une diamine aliphatique avec un diacide carboxylique aliphatique et au moins un autre monomère choisi parmi les diamines aliphatiques différentes de la précédente et les diacides aliphatiques différents du précédent.

A titre d'exemple de lactames, on peut citer ceux ayant de 3 à 12 atomes de carbone sur le cycle principal et pouvant être substitués. On peut citer par exemple le β, β-diméthylpropriolactame, le α,α-diméthylpropriolactame, l'amylolactame, le caprolactame, le capryllactame et le lauryllactame.

A titre d'exemple d'acide alpha oméga aminocarboxylique, on peut citer l'acide amino-undécanoïque et l'acide aminododécanoïque.

A titre d'exemple d'acide dicarboxylique, on peut citer les acides dicarboxylique ayant au moins 4 atomes de carbone : l'acide adipique, l'acide sébacique, l'acide isophtalique. l'acide butanedloique, l'acide 1,4 cyclohexyldilcarboxylique, l'acide téréphtalique, le sel de sodium ou de lithium de l'acide sulphoisophtalique, les acides gras dimérisés ayant une teneur en dimère d'au moins 98% (de préférence ils sont hydrogénés) et l'acide dodécanédloïque HOOC-(CH₂)₁₀-COOH.

A titre d'exemple de diamine, on peut avoir une diamine aliphatique ayant de 6 à 12 atomes qui peut être arylique et/ou cyclique saturée. A titre d'exemples, on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isopharone diamine (IPD), le méthyl pentaméthylènediamine (MPDM), la bis (aminocyclohéxyl) méthane (BACM), la bis (3-méthyl-4 aminocyclohéxyl) méthane (BMACM).

A titre d'exemples de copolyamides, on peut citer des copolymères de caprolactame et de lauryl lactame (PA 6/12), des copolymères de caprolactame, d'acide adipique et d'bexaméthylène diamine (PA 6/6-6), des ccpolymères de caprolactame, de lauryle lactame, d'acide adipique et d'hexaméthylène diamine (PA 6/12/6-6), des copolymères de caprolactame, de lauryle lactame, d'acide amino 11 undécandique, d'acide azéidique et d'hexaméthylène diamine (PA 6/b-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12).

S'agissant des PolyEtherBlocAmide (abrégé PEBA) comprenant des blocs polyamide (abrégé bloc PA) et des blocs polyéther (abrégé bloc PE) de formule générale (I).

-[PA X.Y-PE]ₙ- (I)

dans laquelle :
- PA X.Y représente un bloc polyamide obtenu par polycondensation d'une diamine aliphatique linéaire ayant X atomes de carbone et d'un diacide carboxylique ayant Y atomes de carbone ;
- PE représente un bloc polyéther;
- n représente le nombre d'unités PA X.Y-PE,
caractérisé par le fait que :
- X est au moins égal à 2;
- Y est au moins égal à 2;
- les blocs PE étant soit :
- (i)des blocs PE diols (c'est à dire à extrémités hycdroxyliques) de telle sorte que les liaisons entre les blocs PA X.Y à extrémités carboxyliques et les blocs PE diols sont des liaisons ester, on parle alors de polyéthersteramides, soit
- (ii)des blocs PE à extrémités diNH2 (c'est à dire diamine) dans le cas où, dans les blocs PA X.Y à extrémités carboxyliques, de telle sorte que les liaisons entre les blocs PA X.Y à extrémités carboxyliques et les blocs PE diamines sont des liaisons amides.

De préférence, X est compris entre 6 et 10 bornes incluses et Y est compris entre 10 et 20 bornes incluses. Le bloc polyamide PA X.Y est avantageusement choisi parmi les blocs de polyamide 6.10, polyamide 6.12, polyamide 6.14, polyamide 6.18, polyamide 10.10 et le PA 10.12.
Le bloc polyéther est avantageusement issu d'au moins un polyalkylène éthérpolyol, notamment un polyalkylène éther diol. Le polyalkylène éther diol est plus particulièrement choisi parmi le polyéthyléne glycol, le polypropylène glycol (PPG), le polytrimethylène glycol (P03G), le polytétraméthylène glycol (PTMG) et leurs mélanges.

On peut aussi utiliser des poudres de copolyesteramides comprenant en moles (le total étant 100%)
■ 1 à 98% d'un lactame,
■ 1 à 98% d'une lactone, et éventuellement
■ 1 à 98% d'un autre lactame,
et qui ont un diamètre compris entre 1 µm et 200 µm, une surface spécifique comprise entre 1 et 25 m²/g.

A titre d'exemple de lactames, on peut citer ceux ayant de 3 à 12 atomes de carbone sur le cycle principale et pouvant être substitués. On peut citer par exemple le β, β-diméthylpropiolactame, le α,α-diméthylpropiolactame, l'amylolactame, le caprolactame, le capryllactame et le lauryllactame. On utilise avantageusement le caprolactame et le lauryllactame

A titre d'exemple de lactones, on peut citer la caprolactone, la valérolactone et la butyrolactone. On utilise avantageusement la caprolactone.

Le procédé de préparation de ces poudres de copolyesteramides par polymérisation anionique est décrit dans le document EP1172396.

On peut utiliser des mélanges de polyamide et/ou de copolyamide. Ce sont par exemple des mélanges de polyamides aliphatiques et de polyamides semi-aromatiques et des mélanges de polyamides aliphatiques et de polyamides cycloaliphatiques.

Les poudres peuvent être fabriquées par tout moyen, dissolution et précipitation dans un alcool. Avantageusement, on produit par polymérisation dans un solvant, les poudres étant insolubles dans ce solvant. On peut citer le procédé décrit dans EP192515 et EP303530.

Nous allons maintenant décrire plus en détail un mode de réalisation.

Dans les exemples 1 et 2, nous allons décrire la préparation d'une poudre de particules de PA fonctionnalisées à l'anhydride méthacrylique qui améliore la compatibilité de cette poudre avec les revêtements UV réticulables.

Pour réaliser les essais, on utilise une poudre P1 (poudre de PA12 de diamètre moyen de particule de l'ordre de 10 µm ± 2 µm, avec moins de 5% de particules fines de diamètre < à 5 µm et moins de 2% de grosses particules de diamètres supérieurs à 20 µm, surface spécifique apparente moins de 4m2/g, densité apparente 0_{,}20-0,35 g/cm3, masse volumique 1,03 g/cm3 et point de fusion 175-179°C)

### EXEMPLE 1 :

On prépare 50g d'une solution d'anhydride méthacrylique dans le cyclohexane à 0,2% en poids. 99,9g de poudre de Polyamide P1 est ensuite imprégnée avec cette solution. Le cyclohexane est ensuite éliminé par séchage sous vide. On obtient ainsi une poudre contenant 0,1 % en poids d'anhydride méthacrylique comme monomère de greffage.

Le greffage est réalisé selon le procédé décrit ci-dessus : La poudre imprégnée de monomère de greffage fonctionnalisé est conditionnée dans un flacon étanche, sous atmosphère d'azote. Elle est soumise à une irradiation photonique (Y) sous une dose de 30 kGray. (1Mrad (Mégarad) =10kGray), On obtient ainsi une poudre de particules de PA greffées.

### EXEMPLE 2:

On prépare 50g d'une solution d'anhydride méthacrylique dans le cyclohexane à 0,8% en poids. 99,6g de poudre de Polyamide P1 est ensuite imprégnée avec cette solution. Le cyclohexane est ensuite éliminé par séchage sous vide. On obtient ainsi une poudre contenant 0,4 % en poids d'anhydride méthacrylique comme monomère de greffage.

Le greffage est réalisé selon le procédé décrit ci-dessus : La poudre imprégnée de monomère de greffage fonctionnalisé est conditionnée dans un flacon étanche, sous atmosphère d'azote. Elle est soumise à une irradiation photonique (Y) sous une dose de 50 kGray. On obtient ainsi une poudre de particules de PA greffées.

Les poudres de particules greffées ainsi obtenues (EXEMPLE 1 et EXEMPLE 2) sont ensuite testées ci-dessous en tant qu'additif dans une formulation de vernis UV-réticulable, comparativement à la poudre P1 de départ. Pour cela, elles sont dispersées à un taux de 2% en poids dans un vernis dont la formulation est définie dans le TABLEAU 1 ci-après.

**TABLEAU 1**

| **Composants** | **Nature** | **Masse (g)** |
|---|---|---|
| CN 981 (Cray Valley) | Oligomère aliphatique Uréthane - Diacrylate | 30,0 |
| SR 506 D (Sartomer) | Acrylate d'isobornyle | 12,8 |
| SR 238 (Sartomer) | Diacrylate de 1,6 Hexanediol | 33,7 |
| SR 454 (Sartomer) | Triacrylate de Trimethylolpropane éthoxylé (30E) | 5 |
| SR 399 (Sartomer) | Pentaacrylate de Dipentaerythritol | 5 |
| CN 385 (Cray Valley) | Benzophénone | 2,7 |
| Darocur 1173 (Giba Spécialités) | Photoamorceur | 1,8 |

Le vernis est appliqué sur une surface plane à une épaisseur de 24 µm puis réticulé dans un tunnel UV. On teste ensuite sa résistance à l'abrasion, selon la norme ISO 9352, sur un abrasimètre TABER équipé de meules de type CS17, sous une charge de 500g. La perte de poids occasionnée par le frottement des meules sur le revêtement est mesuré tous les 100 cycles.

Dans le **TABLEAU 2** sont indiquées les pertes de poids moyennes pour 100 cycles, mesurées respectivement pour le vernis sans additif **(TEMOIN 1)** et des vernis contenant les additifs suivants :
- poudre P1 **(TEMOIN 2) ;**
- poudre P1 additivée de monomère n'ayant subi que l'étape a) **(TEMOIN 3) ;**
- poudre P1 greffée et fonctionnalisée ayant subi le procédé décrit ci-dessus c'est à dire les étapes a et b **(EXEMPLE 1).**

**TABLEAU 2**

| | **PERTE DE POIDS MOYENNE POUR 100 CYCLES (mg)** |
|---|---|
| **TEMOIN 1** | 1,9 |
| **TEMOIN 2** | 1,4 |
| **TEMOIN 3** | 1,5 |
| **EXEMPLE 1** | 0,7 |

On constate une nette amélioration des qualités physiques du vernis vis à vis de l'abrasion en comparant les **TEMOINS 2-3** avec **l'EXEMPLE 1** selon l'invention : en effet, la perte de poids moyenne pour 100 tours est divisée par 2, indiquant une amélioration significative de la résistance à l'abrasion du matériau.

Dans le **TABLEAU 3** sont indiquées le nombre de cycles d'usure nécessaire pour atteindre le substrat, déterminé respectivement pour le vernis sans additif **(TEMOIN** 1) et des vernis contenant les additifs suivants :
- poudre P1 **(TEMOIN 2)** ;
- poudre P1 greffée et fonctionnalisée ayant subi le procédé décrit ci-dessus c'est à dire les étapes a et b **(EXEMPLE 2).**

**TABLEAU 3**

| | NOMBRE DE CYCLES POUR ATTEINDRE LE SUBSTRAT |
|---|---|
| **TEMOIN 1** | 300 |
| **TEMOIN 2** | 400 |
| **EXEMPLE 2** | 1000 |

On constate une nette amélioration des qualités physiques du vernis vis vis de l'abrasion en comparant le **TEMOIN 2** avec l'**EXEMPLE 2** selon l'invention.

Un Troisième exemple est réalisé et concerne la modification de l' hydrophobie des poudres PA.

Pour réaliser les essais, on utilise une poudre P1 (poudre de PA12 de diamètre moyen de particule de l'ordre de 10 µm ± 2 µm, avec moins de 5% de particules fines de diamètre < à 5 µm et moins de 2% de grosses particules de diamètres supérieurs à 20 µm, surface spécifique apparente moins de 4 m2/g, densité apparente 0,20-0,35 g/cm3, masse volumique 1,03 g/cm3 et point de fusion 175-179°C) et on utilise 3% en poids **(Exemple 3)** ou 5% en poids **(Exemple 4)** de méthacrylate de polyéthylène glycol de masse molaire égale à 5000g/mol, comme monomère de greffage. Le greffage est réalisé selon le procédé décrit ci-dessus. La solvant utilisé est de l'eau. Les exemples 3 et 4 ont subi les étapes a, b et c.

Afin de tester la modification de l'hydrophobie des poudres, des mesures d'évolution d'angle de contact d'une goutte d'eau sur les poudres en fonction du temps, ainsi qu'une évolution du volume d'eau de la goutte déposée sur les poudres en fonction du temps ont été réalisées. Pour cela, les poudres ont été compactées à froid sous presse de manière à obtenir des pastilles d'environ 1cm de diamètre. Les mesures d'angle de contact sont faites sur un Digidrop DGD Fast60.

On observe donc à travers les **graphes 1 et 2** l'apparition d'un comportement hydrophile sur les poudres modifiées, l'angle de contact de la goutte d'eau étant inférieur pour les deux exemples. On observe également que cette modification permet une absorption d'eau très significative **(Exemple 3 et 4)** alors que sur la poudre non modifiée, le volume de la goutte d'eau n'évolue pas.

L'un des avantages des particules greffées selon l'invention est d'utiliser n'importe quel type de particule dans n'importe quel type de milieu, ce qui pour des formulations dans les domaines cosmétiques, pharmaceutiques, peintures, revètements, électroniques permet d'augmenter les gammes de produits et faciliter leur mise en oeuvre.

Les particules greffées selon l'invention peuvent être utilisées entre autres:
➢ en tant qu'additifs dans des revêtements (par exemple dans des vernis, des peintures) permettant une compatibilité avec le revêtement à la fois physique et chimique : on crée potentiellement un site réactif à la surface de la poudre par l'intermédiaire d'un premier greffon fonctionnalisé qui permettra à la poudre d'être accrochée dans le revêtement. Par ailleurs, en fonction du taux de molécules réactives greffées à la surface des particules de poudre, on n'exclut pas la création d'une couche de compatibilité entre la poudre et le revêtement.

Ces poudres fonctionnalisées sont utiles car elles améliorent la résistance à l'abrasion et à la rayure et augmentent la résistance mécanique du revêtement.
➢ En tant qu'additif dans des matériaux pour améliorer leurs propriétés mécaniques tel que dans des matériaux thermodurcissables.
➢ telles que comme revêtement d'un substrat après avoir été fondues. Dans ce dernier cas, elles peuvent éventuellement être diluées dans des poudres non greffées de PA, coPA , copolyesteramide, avant d'être fondues.
➢ Pour améliorer l'adhésion des particules de poudres de polymères, en particulier de PA ou de CoPA, sur différents types de substrats. La fonctionnalisation cationique permet d'améliorer l'adhésion physique sur des surfaces tels que le papier, la cellulose, les substances kératiniques de la peau, cheveux, lèvres, ongles, poils entre autres.
➢ Dans des applications cosmétiques. Il est possible d'utiliser cette fonctionnalité de surface pour améliorer le toucher de la poudre, améliorer l'effet glissant, favoriser l'effet soyeux, favoriser l'effet « peau de pèche» ou l'effet «soft-touch» en terminologie anglo-saxonne. Il est aussi possible d'utiliser cette fonctionnalité pour faciliter l'introduction des poudres en formulations lipophiles, ou hydrophiles, ou en émulsions. En particulier, la fonctionnalité peut avantageusement être utilisée pour conférer aux particules un caractère amphiphile qui pourront alors avoir un effet stabilisant sur les émulsions dans lesquelles elles sont introduites.
➢ Dans des applications biocides (qui tue les microbes) ou biostatiques (qui stoppe ou limite la prolifération des microbes), il est possible d'apporter des fonctions biocides et/ou biostatiques au milieu dans lequel se trouvent les particules de polymères, en particulier de polyamide ou copolyamide, en greffant des greffons à fonctionnalité biocide et/ou biostatique tels que des ammonium quaternaire, phosphate de zirconium, phosphate de calcium, composé complexe de Zn ou de Zn/Ag entre autre.
➢ comme support à un principe actif quelque soit sa nature (cosmétique, biocide, biostatique, pharmaceutique...), ce dernier ne pourra pas se séparer de la particule et donc ne pourra pas migrer seul dans le milieu dans lequel il se trouve. Dans une application cosmétique, cela a un avantage en limitant la pénétration dans les couches lipidiques de la peau de principes actifs tels que des substances irritantes par exemple les filtres UV ou en favorisant le maintien à la surface de la peau de principes actifs tels que des anti-radicaux libres, des hydratants, des colorants, des auto-bronzants, des nano-particules (diamètres des grains élémentaires < ou =à 100nm) recouvertes en surface par un traitement compatible avec un greffage sur la particule de poudre, de préférence lesdites nano-particules traitées étant susceptibles de réagir avec la seconde fonction du premier greffon. Les particules greffées supportent le principe actif restant en surface desdites couches lipidiques de la peau. De préférence, ce seront les particules greffées selon l'invention ayant subit le procédé de greffage en deux étapes, le second greffon étant le principe actif.

## Revendications

1. Particule de poudre de polyamide (PA), copolyamide (CoPA), ou de PolyEtherBlocAmide (PEBA), greffée en surface par au moins un monomère de greffage fonctionnalisé par au moins une fonction réactive.

2. Particule selon la revendication 1, **caractérisée en ce que** le ou les monomères de greffage fonctionnalisé est un monomère de greffage au moins bi-fonctionnalisé, comprenant au moins une première fonction comportant au moins une insaturation éthylénique susceptible de réagir avec la particule à greffer et au moins une seconde fonction réactive susceptible de réagir par liaison covalente ou physique.

3. Particule selon la revendication 2, **caractérisée en ce que** le monomère de greffage au moins bi-fonctionnalisé est lié à un second greffon au moins mono-fonctionnaliséledit greffon comprenant au moins une fonction susceptible de réagir avec la seconde fonction du monomère de greffage bi-fonctionnalisé par l'intermédiaire d'une liaison covalente ou physique.

4. Particule selon l'une des revendications 1 à 3, **caractérisée en ce que** la particule de poudre de polyamide est choisie parmi le PA6, le PA6-6, le PA 11 et le PA 12.

5. Particule selon l'une des revendications 1 à 3, **caractérisée en ce que** la fonction réactive du ou des monomère(s) de greffage fonctionnalisé(s) est choisie parmi une fonction acide carboxylique et ses dérivés, ester, anhydride, chlorure d'acide, amide, cétone, isocyanate, oxazoline, époxyde amine ou hydroxyde.

6. Particule selon l'une des revendications 1 à 5, **caractérisé en ce que** le monomère de greffage fonctionnalisé est fonctionnalisé par au moins une fonction réactive à propriétés biocides et/ou biostatiques.

7. Particule selon l'une des revendications 1 à 5, **caractérisée en ce que** le monomère de greffage fonctionnalisé est un ester méthacrylique d'alcool polyhydrique, tel que le méthacrylate de polyéthylène glycol ou le diméthacrylate d'éthylène glycol.

8. Particule selon la revendication 7, **caractérisée en ce qu'**elle est PA12.

9. Composition comprenant des particules selon l'une des revendications 1 à 8.

10. Composition selon la revendication 9, **caractérisée en ce qu'**elle est un matériau thermodurcissable additivé par lesdites particules.

11. Procédé de fabrication de particules de poudre greffées en surface selon l'une des revendications 1 à 8, **caractérisé en ce qu'**elle comprend :
a) une étape de mélange desdites particules de poudre avec au moins un monomère de greffage fonctionnalisé, lesdites particules de poudre étant des particules de polyamide (PA), copolyamide (CoPA), ou de PolyEtherBlocAmide (PEBA), puis
b) une étape d'irradiation photonique (γ) ou électronique (β) de la poudre imprégnée de monomère de greffage fonctionnalisé issue de a), ceci sous une dose comprise entre 1,5 et 15 Mrad.

12. Procédé selon la revendication 11, **caractérisé en ce que** l'on effectue une étape c) après l'étape b) consistant à éliminer tout ou partie du monomère de greffage n'ayant pas été greffé sur la poudre lors de l'étape b).

13. Procédé selon l'une des revendications 11 ou 12, **caractérisé en ce que** le monomère de greffage fonctionnalisé introduit au cours de l'étape a) est un monomère de greffage bi-fonctionnalisé, comprenant au moins une première fonction comportant au moins une insaturation éthylénique susceptible de réagir avec la particule à greffer et au moins une seconde fonction réactive par liaison covalente ou physique.

14. Procédé Selon la revendication 13, **caractérisé en ce que** l'on effectue une étape d) après l'étape c) consistant à introduire un second greffon au moins mono-fonctionnalisé comprenant au moins une fonction susceptible de réagir avec la seconde fonction du monomère de greffage bi-fonctionnalisé.

15. Procédé selon l'une des revendications 13 ou 14 **caractérisé en ce que** la seconde fonction réactive du monomère de greffage bi-fonctionnalisé introduit au cours de l'étape a) est choisie parmi une fonction acide carboxylique et ses dérivés ester, anhydride, chlorure d'acide, amide, cétone, isocyanate, oxazoline, époxyde, amine ou hydroxyde.

16. Procédé selon l'une des revendications 11 à 15 **caractérisé en ce que** le monomère de greffage bi-fonctionnalisé introduit au cours de l'étape a) est l'anhydride maléique ou l'anhydride méthacrylique.

17. Utilisation de particules de poudre selon l'une des revendications 1 à 8 pour améliorer l'adhésion des particules de polymères, an présence de PA, CoPA ou PEBA, sur substrats tels que papier, cellulose, substance kératinique dé la peau, cheveux, ongles et poils.

18. Utilisation dé particules de poudre selon l'une des revendications 1 à 8 dans des compositions cosmétiques pour améliorer l'effet glissant et/ou l'effet soyeux.

19. Utilisation de particules de poudre selon l'une des revendications 1. à 8 pour favoriser l'effet peau de pêche.

20. Utilisation de particule de poudre selon la revendication 3, **caractérisé en ce que** le second greffon au moins mono-fonctionnalisé est choisi parmi les filtres UV, les anti-radicaux libres, les hydratants, les colorants les auto-bronzants, les nano-particules (diamètres élémentaires des grains <ou= à 100nm) recouvertes en surface par un traitement compatible avec la seconde fonction du monomère de greffage au moins bi-fonctionnalisé.

21. Utilisation de particules de poudre selon l'une des revendications 1 a 8 en tant qu'additif dans un revêtement.

22. Utilisation selon la revendication 21, **caractérisé en ce que** le revêtement est choisi parmi les vernis et peintures.

23. Utilisation des particules de poudre selon l'une des revendications 1 à 8 en tant qu'additifs dans des matériaux pour améliorer leurs propriétés mécaniques.

24. Utilisation selon la revendication 23, **caractérisée en ce que** les matériaux sont des matériaux thermodurcissables.

25. Utilisation de particules de poudre selon l'une des revendications 1 à 8, éventuellement diluées dans des poudres non greffées de PA, CoPA, polyoléfine, copolyesteramide, de polymères fluorés, comme revêtement d'un substrat après avoir été fondues.

26. Utilisation de particules de poudre selon l'une des revendications 1 à 8 comme support à un principe actif.

## Claims

1. Polyamide (PA), copolyamide (coPA) or polyether-block-amide (PEBA) powder particle, grafted onto the surface of which is at least one grafting monomer functionalized by at least one reactive functional group.

2. Particle according to Claim 1, **characterized in that** the functionalized grafting monomer(s) is(are) an at least bifunctionalized grafting monomer comprising at least a first functional group having at least one ethylenically unsaturated moity capable of reacting with the particle on which the grafting is carried out and at least a reactive second functional group capable of reacting via a covalent or physical bond.

3. Particle according to Claim 2, **characterized in that** the at least bifunctionalized grafting monomer is linked to an at least monofunctionalized second graft, said graft comprising at least one functional group capable of reacting with the second functional group of the bifunctionalized grafting monomer via a covalent or physical bond.

4. Particle according to one of Claims 1 to 3, **characterized in that** the polyamide powder particle is chosen from PA-6, PA-6,6, PA-11 and PA-12.

5. Particle according to one of Claims 1 to 3, **characterized in that** the reactive functional group of the functionalized grafting monomer(s) is chosen from a carboxylic acid functional group and its ester, anhydride, acid chloride, amide, ketone, isocyanate, oxazoline, epoxide, amine or hydroxide derivatives.

6. Particle according to one of Claims 1 to 5, **characterized in that** the functionalized grafting monomer is functionalized by at least one reactive functional group having biocidal and/or biostatic properties.

7. Particle according to one of Claims 1 to 5, **characterized in that** the functionalized grafting monomer is a methacrylic ester of a polyhydric alcohol, such as polyethylene glycol methacrylate or ethylene glycol dimethacrylate.

8. Particle according to Claim 7, **characterized in that** it is PA-12.

9. Composition comprising particles according to one of Claims 1 to 8.

10. Composition according to Claim 9, **characterized in that** it is a thermosetting material to which said particles have been added.

11. Process for producing surface-grafted powder particles according to one of Claims 1 to 8, **characterized in that** it comprises:
a) a step of blending said powder particles with at least one functionalized grafting monomer, said powder particles being polyamide (PA), copolyamide (coPA) or polyether-block-amide (PEBA) particles, followed by;
b) a step of irradiating the powder impregnated with functionalized grafting monomer resulting from a) with photons (γ-radiation) or electrons (β-radiation), with a dose ranging from 0.5 to 15 Mrad.

12. Process according to Claim 11, **characterized in that**, after step b), a step c) is carried out that consists in removing all or some of the grafting monomer that has not been grafted onto the powder during step b).

13. Process according to either of Claims 11 and 12, **characterized in that** the functionalized grafting monomer introduced during step a) is a bifunctionalized grafting monomer comprising at least a first functional group having at least one ethylenically unsaturated moity capable of reacting with the particle on which the grafting is carried out and at least a second functional group that can react via a covalent or physical bond.

14. Process according to Claim 13, **characterized in that**, after step c), a step d) is carried out that consists in introducing an at least monofunctionalized second graft comprising at least one functional group capable of reacting with the second functional group of the bifunctionalized grafting monomer.

15. Process according to either of Claims 13 and 14, **characterized in that** the reactive second functional group of the bifunctionalized grafting monomer introduced during step a) is chosen from a carboxylic acid functional group and its ester, anhydride, acid chloride, amide, ketone, isocyanate, oxazoline, epoxide, amine or hydroxide derivatives.

16. Process according to one of Claims 11 to 15, **characterized in that** the bifunctionalized grafting monomer introduced during step a) is maleic anhydride or methacrylic anhydride.

17. Use of powder particles according to one of Claims 1 to 8 for improving the adhesion of polymer, preferably PA, coPA or PEBA, particles to substrates such as paper, cellulose or keratinous substance of skin, nails, head hair and body hair.

18. Use of powder particles according to one of Claims 1 to 8 in cosmetic compositions in order to improve slipperiness and/or silkiness.

19. Use of powder particles according to one of Claims 1 to 8 to promote a soft-touch effect.

20. Use of powder particles according to Claim 3, **characterized in that** the at least monofunctionalized second graft is chosen from UV filters, free-radical scavengers, moisturizers, dyes, self-tanning agents and nanoparticles (elementary grain diameters ≤ 100 nm) surface-coated with a treatment compatible with the second functional group of the at least bifunctionalized grafting monomer.

21. Use of powder particles according to one of Claims 1 to 8 as an additive in a coating.

22. Use according to Claim 21, **characterized in that** the coating is chosen from varnishes and paints.

23. Use of powder particles according to one of Claims 1 to 8 as additives in materials for improving the mechanical properties thereof.

24. Use according to Claim 23, **characterized in that** the materials are thermosetting materials.

25. Use of powder particles according to one of Claims 1 to 8, optionally diluted in non-grafted PA, coPA, polyolefin, copolyesteramide or fluoropolymer powders, as coating for a substrate after they have been melted.

26. Use of powder particles according to one of Claims 1 to 8 as support for an active principle.

## Patentansprüche

1. Partikel eines Polyamidpulvers (PA), Copolyamidpulvers (CoPA) oder Polyetherblockamidpulvers (PEBA), das an der Oberfläche mit mindestens einem Pfropfmonomer gepfropft ist, welches mit mindestens einer reaktiven Funktion funktionalisiert ist.

2. Partikel nach Anspruch 1, **dadurch gekennzeichnet, dass** es sich bei dem oder den funktionalisierten Pfropfmonomer(en) um ein zumindest bifunktionalisiertes Monomer handelt, das zumindest eine erste Funktion, die mindestens eine ethylenisch ungesättigte Bindung aufweist, die befähigt ist, mit dem zu pfropfenden Partikel zu reagieren, und zumindest eine zweite reaktive Funktion besitzt, die über eine kovalente oder physikalische Bindung reagiert.

3. Partikel nach Anspruch 2, **dadurch gekennzeichnet, dass** das zumindest bifunktionalisierte Pfropfmonomer an einen zweiten, zumindest monofunktionalisierten Pfropfzweig gebunden ist, wobei der Pfropfzweig zumindest eine Funktion besitzt, die befähigt ist, mit der zweiten Funktion des bifunktionalisierten Pfropfmonomers über eine kovalente oder physikalische Bindung zu reagieren.

4. Partikel nach einem der Ansprüche 1 bis 3, **dadurch gekennzeichnet, dass** das Partikel eines Polyamidpulvers unter PA6, PA6-6, PA11 und PA12 ausgewählt ist.

5. Partikel nach einem der Ansprüche 1 bis 3, **dadurch gekennzeichnet, dass** die reaktive Funktion des funktionalisierten Pfropfmonomers oder der funktionalisierten Pfropfmonomere unter einer Carboxyfunktion oder einer Funktion eines Carbonsäurederivats, Esterfunktion, Anhydridfunktion, Säurechloridfunktion, Amidfunktion, Ketonfunktion, Isocyanatfunktion, Oxazolinfunktion, Epoxidfunktion, Aminfunktion oder Hydroxyfunktion ausgewählt ist.

6. Partikel nach einem der Ansprüche 1 bis 5, **dadurch gekennzeichnet, dass** das funktionalisierte Pfropfmonomer mit zumindest einer reaktiven Funktion mit bioziden und/oder biostatischen Eigenschaften funktionalisiert ist.

7. Partikel nach einem der Ansprüche 1 bis 5, **dadurch gekennzeichnet, dass** das funktionalisierte Pfropfmonomer ein Methacrylsäureester eines mehrwertigen Alkohols ist, wie Polyethylenglycolmethacrylat oder Ethylenglycoldimethacrylat.

8. Partikel nach Anspruch 7, **dadurch gekennzeichnet, dass** es sich um PA 12 handelt.

9. Zusammensetzung, die Partikel nach einem der Ansprüche 1 bis 8 enthält.

10. Zusammensetzung nach Anspruch 9, **dadurch gekennzeichnet, dass** es sich um ein in der Wärme härtbares Material handelt, zu dem die Partikel hinzugefügt wurden.

11. Verfahren zur Herstellung von an der Oberfläche gepfropften Partikeln nach einem der Ansprüche 1 bis 8, **dadurch gekennzeichnet, dass** es umfasst:
a) einen Schritt des Mischens der Partikel des Pulvers mit mindestens einem funktionalisierten Pfropfmonomer, wobei es sich bei des Pulverpartikeln um Polyamidpartikel (PA), Copolyamidpartikel (CoPA) oder Polyetherblockamidpartikel (PEBA) handelt, und anschließend
b) einen Schritt der Bestrahlung des mit dem funktionalisierten Pfropfmonomer imprägnierten Pulvers aus Schritt a) mit Photonen (γ) oder Elektronen (β) mit einer Dosis im Bereich von 1,5 bis 15 Mrad.

12. Verfahren nach Anspruch 11, **dadurch gekennzeichnet, dass** nach Schritt b) ein Schritt c) durchgeführt wird, der darin besteht, das in Schritt b) nicht auf das Pulver gepfropfte Pfropfmonomer ganz oder teilweise zu entfernen.

13. Verfahren nach einem der Ansprüche 11 oder 12, **dadurch gekennzeichnet, dass** das in Schritt a) eingebrachte funktionalisierte Pfropfmonomer ein bifunktionalisierte Pfropfmonomer ist, das zumindest eine erste Funktion besitzt, die mindestens eine ethylenisch ungesättigte Bindung aufweist, die befähigt ist, mit dem zu pfropfenden Partikel zu reagieren, und zumindest eine zweite reaktive Funktion, die über eine kovalente oder physikalische Bindung reagiert.

14. Verfahren nach Anspruch 13, **dadurch gekennzeichnet, dass** nach Schritt c) ein Schritt d) durchgeführt wird, der darin besteht, einen zweiten, zumindest monofunktionalisierten Pfropfzweig einzuführen, der mindestens eine Funktion aufweist, die befähigt ist, mit der zweiten Funktion des bifunktionalisierten Pfropfmonomers zu reagieren.

15. Verfahren nach einem der Ansprüche 13 oder 14, **dadurch gekennzeichnet, dass** die zweite reaktive Funktion des im Laufe des Schritts a) eingebrachten, bifunktionalisierten Pfropfmonomers unter einer Carboxyfunktion oder einer Funktion eines Carbonsäurederivats, Esterfunktion, Anhydridfunktion, Säurechloridfunktion, Amidfunktion, Ketonfunktion, Isocyanatfunktion, Oxazolinfunktion, Epoxidfunktion, Aminfunktion oder Hydroxyfunktion ausgewählt ist.

16. Verfahren nach einem der Ansprüche 11 bis 15, **dadurch gekennzeichnet, dass** es sich bei dem im Laufe des Schritts a) eingebrachten bifunktionalisierten Pfropfmonomer um Maleinsäureanhydrid oder Methacrylsäureanhydrid handelt.

17. Verwendung von Pulverpartikeln nach einem der Ansprüche 1 bis 8 zur Verbesserung der Haftung von Polymerpartikeln in Gegenwart von PA, CoPA oder PEBA auf Substraten wie Papier, Cellulosen, Keratinsubstanzen der Haut, der Haare, der Nägel und der Körperhaare.

18. Verwendung von Pulverpartikeln nach einem der Ansprüche 1 bis 8 in kosmetischen Zusammensetzungen zur Verbesserung der Gleitwirkung und/oder des Pflegeeffektes.

19. Verwendung von Pulverpartikeln nach einem der Ansprüche 1 bis 8 zur Begünstigung der Pfirsichhautwirkung.

20. Verwendung des Pulverpartikels nach Anspruch 3, **dadurch gekennzeichnet, dass** der zumindest monofunktionalisierte Pfropfzweig unter den UV-Filtern, Radikalfängern für freie Radikale, Hydratisierungsmitteln, Farbmitteln, Selbstbräunungsmitteln, Nanopartikeln (Durchmesser der Elementarpartikel < 100 nm), die an der Oberfläche durch eine Behandlung beschichtet sind, die mit der zweiten Funktion des zumindest bifunktionalisierten Pfropfmonomers verträglich ist, ausgewählt ist.

21. Verwendung von Pulverpartikeln nach einem der Ansprüche 1 bis 8 als Additiv bei einer Beschichtung.

22. Verwendung nach Anspruch 21, **dadurch gekennzeichnet, dass** die Beschichtung unter den Farben und Lacken ausgewählt ist.

23. Verwendung von Pulverpartikeln nach einem der Ansprüche 1 bis 8 als Additive in Materialien zur Verbesserung ihrer mechanischen Eigenschaften.

24. Verwendung nach Anspruch 23, **dadurch gekennzeichnet, dass** es sich bei den Materialien um wärmehärtbare Materialien handelt.

25. Verwendung von Pulverpartikeln nach einem der Ansprüche 1 bis 8 gegebenenfalls verdünnt in nicht gepfropften Pulvern von PA, CoPA, Polyolefin, Copolyesteramid, fluorierten Polymeren als Beschichtung für ein Substrat nach dem Schmelzen.

26. Verwendung von Pulverpartikeln nach einem der Ansprüche 1 bis 8 als Trägerstoff für einen Wirkstoff.
